# EUROPEAN PATENT SPECIFICATION

(11) **EP 2 810 568 B1**
(45) Date of publication and mention of the grant of the patent: **04.04.2018**
(21) Application number: 14170876.8
(22) Date of filing: 03.06.2014
(51) Int. Cl.: A23N 1/02, B02C 18/06, B02C 18/18, A22C 17/00

(54) **Extracting machines for food products**
Extraktionsmaschinen für Lebensmittelprodukte
Machines d'extraction de produits alimentaires

(30) Priority: 04.06.2013 IT RE20130040
(43) Date of publication of application: 10.12.2014
(73) Proprietor: Navatta Group Food Processing S.R.L., 43010 Langhirano, Parma (IT)
(72) Inventor: Navatta, Massimo, 43010 PARMA (IT); Vignoli, Luigi, 43022 MONTECHIARUGOLO, PARMA (IT)
(74) Representative: Corradini, Corrado

(56) References cited:
- EP-A1- 0 511 174
- EP-A1- 2 022 342
- WO-A1-01/83111
- WO-A1-01/96021
- WO-A2-2009/063309
- US-A- 1 762 592
- US-A- 2 389 862

## Description

The present invention relates to extracting machines for food products, and in particular machines used in the conserving industry for extracting juice and/or puree of vegetable products, such as for example tomatoes or fruit, separating them from the skins, seeds and/or other waste.

Normally extracting machines of this type, also known by the name of extractors or refiners, comprise a substantially tubular sieve, for example cylindrical or truncoconical, which is housed internally of an appropriate protective casing. A loading mouth is associated to the protective casing, via which the product to be treated is supplied to a first end of the sieve, and a discharge mouth, through which the waste exiting from the opposite end of the sieve is unloaded to the outside. A rotor is rotatably housed internally of the sieve, which generally comprises a central shaft on which a cylindrical hub is keyed which bears a group of radial blades arranged in spoke-fashion, each of which extends axially over a whole length of the hub and exhibits a lateral edge thereof very close to the internal surface of the sieve. Such a machine is known from e.g. WO 2009/063309. Thanks to the rotation of this rotor, the radial blades impress on the product a centrifugal thrust which compresses it against the sieve, causing the separation of the fluid substances, such as the juice and/or the puree, from the solid waste, such as the seeds and the skins. In particular, the fluid substances pass through the meshes of the sieve and are collected in appropriate trays predisposed below it, while the solid waste remains internally of the sieve and is progressively pushed towards the discharge mouth.

To facilitate the advancing of the solid waste towards the discharge mouth, the radial blades of some extracting machines develop slightly curvedly with respect to the central axis of the rotor, such as to realize a sort of propeller which impresses on the product contained in the sieve both the above-mentioned centrifugal thrust and a certain axial thrust.

The quality of the refined product that passes through the meshes of the sieve generally depends on various parameters, one of the most important of which is the degree of pressing the product is subjected to, i.e. on the percentage of fluid substances which are contained in the waste on exit thereof from the machine. In practice, a rather low degree of pressing normally implies a better quality of refined product, as the seeds and skins are subjected to smaller mechanical stresses, but it implies a lower performance of the starting product, as well as a large percentage of fluid substances are contained in the solid waste. On the other hand, a high degree of pressing increases the performance of the starting product, but requires the waste products to be subjected to high levels of mechanical stress, which can cause the rupturing of the skin and/or seeds, with a consequent release of oils or other substances which have a deleterious effect on the quality of the refined product.

To regulate the degree of pressing, traditional extracting machines include the possibility of varying the rotation velocity of the rotor and possibly replacing the sieve with another sieve having different dimensions. In the case of extracting machines using truncoconical sieves and rotors, there normally exists a possibility of slightly modifying the axial position of the rotor with respect to the sieve. By displacing the rotor towards the outside of the sieve, an increase of the distance between the lateral edge of the radial blades and the internal surface of the sieve is obtained, with a consequent reduction of the degree of pressing. By displacing the rotor towards the inside, a reduction of the distance between the lateral edge of the radial blades and the internal surface of the sieve is obtained, with a consequent increase in the degree of pressing.

Notwithstanding this possibility of regulating, the traditional extracting machines are not generally able to effectively treat products which have very different viscosity to one another. In fact, the viscosity of the product to be treated considerably influences the process parameters of the machine, among which for example the entity of the centrifugal thrust necessary for obtaining a determined degree of pressing and also the entity of the axial thrust necessary for advancing the waste towards the discharge mouth. For this reason, if the viscosity value of the product to be treated significantly varies with respect to the target for which the machine has been designed and constructed, it might not be possible, using the above-mentioned regulating systems, to obtain a configuration which enables obtaining an acceptable compromise between the opposite needs to have a good refined product quality and a low percentage of fluid substances mixed with the waste at the discharge.

In an attempt to obviate this drawback, the prior art comprises an extracting machine in which the radial blades can be orientated with respect to the rotation axis of the rotor. In this way, by varying the orientation of the blades, it is possible to vary the entity of the centrifugal component and the axis component of the thrust exerted by the rotor, and thus regulate them according to the greater or lesser viscosity of the product to be treated.

A drawback of this solution, however, consists of the fact that in order to enable this orientation of the radial blades, the rotor comprises many components and mobile parts that not only make it rather complicated and expensive from the constructional point of view, but also require the use of specific particulars which prevent any product residues from getting in the interstices between the above-described mobile parts, thus compromising the hygiene and therefore the sterility of the whole extracting machine.

In the light of the above, an aim of the present invention is to obviate the drawbacks of the prior art, making available a rotor for extracting machines which enables the machines to be very versatile while remaining a solution that is simple, rational and relatively inexpensive.

These and other aims are attained with the characteristics of the invention reported in the independent claims. The dependent claims delineate preferred and/or particularly advantageous aspects of the invention.

In particular, an embodiment of the present invention discloses a rotor for extracting machines for food products, which comprises a pack of cylindrical bodies arranged in succession and coaxial, wherein each of the cylindrical bodies is provided with a respective group of blades arranged in spoke-fashion there-about, and wherein the cylindrical bodies are joined to one another by connecting means which enable modifying the reciprocal angular position thereof about the central common axis.

In this solution, each blade can have a substantially flat shape and can be orientated parallel to the common central axis. The blades associated to each cylindrical body can further be arranged angularly equidistant from one another about the common central axis.

The main advantage of the above-disclosed solution consists in the fact that, by appropriately varying the reciprocal angular position of the cylindrical bodies, the blades of the rotor can assume multiple different configurations.

In particular, the blades of all the cylindrical bodies can be perfectly aligned between them such as to form parallel rows to the rotor axis, such as substantially to realize a traditional configuration in which each row of blades in fact defines a single radial blade which develops over the whole length of the rotor. It is in alternatively possible to reposition the cylindrical bodies such that the blades of each of them are angularly offset by a certain angle with respect to the blades associated to the following cylindrical body. In this way, the blades of each row can be distributed for example in a helical progression with respect to the rotor axis, which enables exerting on the product both the centrifugal thrust necessary for the pressing and for an axial thrust. The entity of the centrifugal thrust and the axial thrust can further be regulated simply by increasing or reducing the angular step between the blades of each row, i.e. by accentuating or reducing the inclination of the propeller defined thereby, for example in order to be able effectively to process products having even very different viscosity to one another. The angular step separating the blades of each row can also be regulated differently on the basis of the axial position thereof on the rotor, obtaining a propeller with variable inclination which enables for example increasing the degree of pressing at the outlet end of the sieve rather than at the inlet end.

Lastly, according to whether the progression of the propeller is in the same or opposite direction to the rotor, it is respectively possible for the axial thrust to be directed in the advancement direction of the product or in the opposite direction.

In the first case, the axial thrust can thus facilitate the advancement and the discharge of the waste, while in the second case, the axial thrust creates a counter-pressure which further increases the pressure with which the product is pushed towards the internal surface of the sieve and thus the degree of pressing, to the point of being able to obtain, at the discharge, a waste practically without fluid substances.

From the above it clearly emerges that an extracting machine equipped with a rotor according to the characteristics of the invention is extremely versatile, to the point of being able to be effectively used both as a sieve for tomatoes and as a refining machine for fruits, or even a press for waste.

In an aspect of the invention, connecting means enabling modifying the angular position of the cylindrical bodies can comprise, for each pair of consecutive cylindrical bodies, a demountable joint which enables joining the cylindrical bodies of the pair in various reciprocal angular positions.

The use of demountable joints configures a rather simple constructional, economical and hygienic solution, thanks to which it is in any case possible to vary the configuration of the blades relatively rapidly, simply by demounting the various cylindrical bodies of the rotor and remounting them in a different reciprocal angular position.

With the aim of making the mounting and demounting steps more rapid and precise, the demountable joint able to connect each pair of cylindrical bodies can be a frontally-engaging joint.

The frontally-engaging joint can comprise, for example, at least a frontally-projecting element from an end of a first cylindrical body of each pair and arranged in an offset position with respect to the common central axis, and a plurality of offset holes afforded frontally at an end of the second cylindrical body of each pair, which can be selectively aligned and coupled to the projecting element of the first cylindrical body, following a reciprocal rotation of the first and second cylindrical body about the common central axis.

In this way, by inserting the projecting element of the first cylindrical body in different holes of the second cylindrical body, consequently also the reciprocal angular position of the two cylindrical bodies is also varied.

In an aspect of the invention, the offset holes of the second cylindrical body can be arranged angularly equidistant from one another about the common central axis, for example they can be separated from one another by an angle of about 5 degrees.

In this way, the angular displacement between the two cylindrical bodies of each pair, and thus between the relative blades, can be effectively regulated in discrete steps in a relatively large interval of values.

In a preferred aspect of the invention, the projecting element can be simply defined by a plug, which is partially inserted in an offset hole afforded frontally at the end of the first cylindrical body of each pair.

Thanks to this solution the realization of the two cylindrical bodies of the pair is advantageously simplified.

It is specified that although the front joint can be made by a single plug that can insert in two aligned holes of the first and second cylindrical body, it is however preferable for it to comprise a plurality of the plugs, each of which can insert in respective pairs of aligned holes of the first and second cylindrical body, such as to increase the torque resistance of the joint.

For this reason, the end of the first cylindrical body can also be frontally provided with a plurality of offset holes, each of which can partially house a respective plug.

The offset holes can be arranged angularly equidistant about the central axis, for example separated by the same angular step which also separates the offset holes of the second cylindrical body or possibly by a multiple thereof.

With the aim of enabling mounting and activating of the rotor, in a preferred aspect of the invention the pack of cylindrical bodies is coaxially inserted on a single support shaft, with respect to which it is axially and rotatably constrained.

In particular, the pack of cylindrical bodies can be rotatably constrained to the support shaft by means of at least a key which engages contemporaneously in a seating fashioned in the support shaft and a seating afforded in at least one of the cylindrical bodies.

The pack of cylindrical bodies can instead be axially constrained to the support shaft by means of a collar, which can be screwed to the end of the support shaft, such as to keep the pack of cylindrical bodies against an abutment of the support shaft.

These particulars have the advantage of enabling de-insertion of the cylindrical bodies from the support shaft, to change the reciprocal angular position thereof and thus the remounting thereof on the support shaft, with a relatively modest number of operations and therefore simply and rapidly.

In a further embodiment of the present invention an extracting machine for food products is disclosed, which comprises a sieve having a substantially tubular shape provided with an inlet for the product to be treated and an outlet for waste, and a rotor according to any one of the preceding claims, which is rotatably housed internally of the sieve.

This embodiment of the invention substantially attains the same advantages as those described above in relation to the rotor, in particular the advantage of supplying a very versatile machine which can be regulated to operate on different products and with different crushing degrees, for example as a tomato strainer, as a puree refiner and possibly also as a press for waste.

Further characteristics and advantages of the invention will emerge from a reading of the following description provided by way of non-limiting example, with the aid of the figures illustrated in the accompanying figures of the drawings.
Figure 1 shows the longitudinal section of an extracting machine according to an embodiment of the present invention.
Figure 2 is a larger-scale illustration of the rotor belonging to the extracting machine of figure 1.
Figure 3 is the view along line III-III of figure 2.
Figure 4 is the view along line IV-IV of figure 2.
Figure 5 is a lateral view, not sectioned and in larger scale, of only the rotor belonging to the extracting machine of figure 1.
Figure 6 is a perpendicular projection of figure 5.
Figure 7 is the lateral view of figure 5 in which the blades of the rotor are in an offset configuration.
Figure 8 is a perpendicular projection of figure 7.

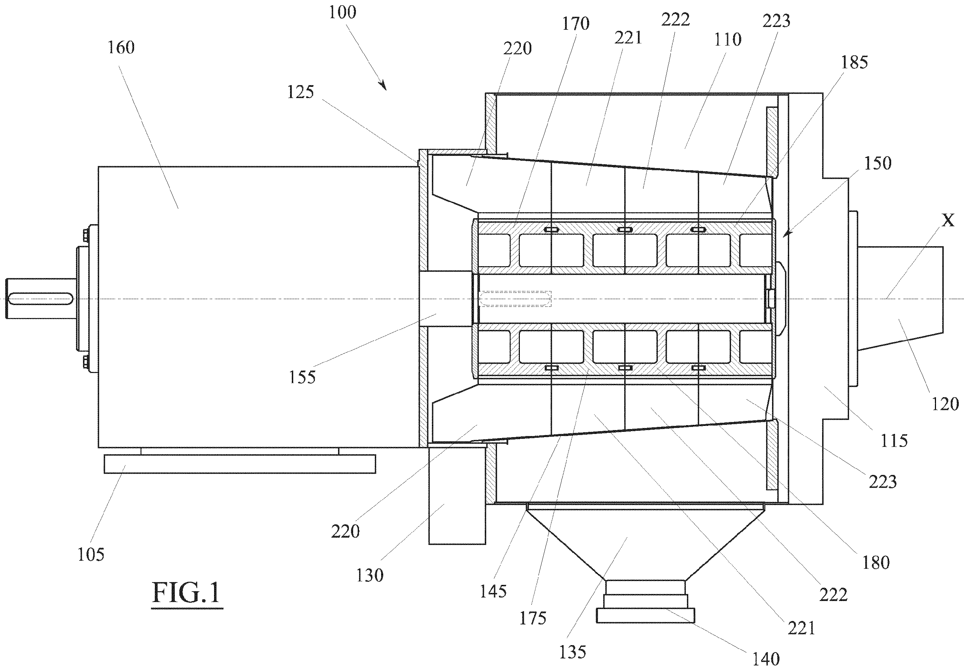

Figure 1 illustrates an extracting machine 100, which is generally able to treat vegetable products, such as for example tomatoes or fruit, in such a way as to extract juice and/or puree from them, separating them from the skins, the seeds and/or other waste. In particular, the extracting machine 100 can operate both hot and cold, for example for extracting juice from previously-triturated and heated tomatoes, or for extracting puree from Mediterranean and/or tropical fruit, lacking a seed or stone or stoned, and previously sliced.

The extracting machine 100 comprises a base 105 on which a casing 110 is installed, having a substantially cylindrical shape and a horizontal axis. The front end of the cylindrical casing 110 is closed by a cover 115, at a centre of which a loading mouth 120 is fashioned for introduction of the product to be treated. According to the type of product to be treated, it can be supplied to the loading mouth 120 by means of various systems (not illustrated), among which for example a positive displacement pump or a screw-type device. The rear end of the cylindrical casing 110 is closed by a bottom 125, at which a discharge mouth 130 is fashioned for the waste. The juice and/or puree are collected in a lower hopper 135, which is joined to the cylindrical casing 110 and is provided with an outlet mouth 140.

A sieve 145 is fixed to the inside of the cylindrical casing 110, generally tubular, the central axis X of which is orientated horizontally and preferably coincides with the axis of the cylindrical casing 110. The sieve 145 can be realized by a slim metal sheet wound on itself about the central axis X and suitably perforated, such that the holes of the sheet define the meshes of the sieve. In the illustrated example, the sieve 145 has a substantially truncoconical shape, the smaller base of which is located at the cover 115, such as to be in communication with the loading mouth 120, while the larger base is located at the bottom 125, such as to be in communication with the discharge mouth 130. It is however possible, in other embodiments, for the sieve 145 to be perfectly cylindrical in shape.

A rotor is housed internally of the sieve 145, denoted in its entirety by 150, which can rotate on itself about the central axis X, such as to centrifuge the product in inlet against the internal surface of the sieve 145 and cause the separation of the fluid substances, such as juice and/or puree, from the solid waste, such as the seeds or peel. The fluid substances thus pass through the meshes of the sieve 145 and are progressively pushed towards the discharge mouth 130.

The rotor 150 comprises a support shaft 155 having an axis coinciding with the central axis X, which exhibits an end projecting at the cover 115 while it exits from the cylindrical casing 110 through the bottom 125. The support shaft 155 is rotatably supported by a group of bearings, which are closed internally of a protective casing 160 which is realized in a single body with the base 105 externally of the cylindrical casing 110. The portion of the support shaft 155 which exits from the opposite side of the protective casing 160 is connected with an electrical activating motor (not illustrated) able to set the whole rotor 150 in rotation.

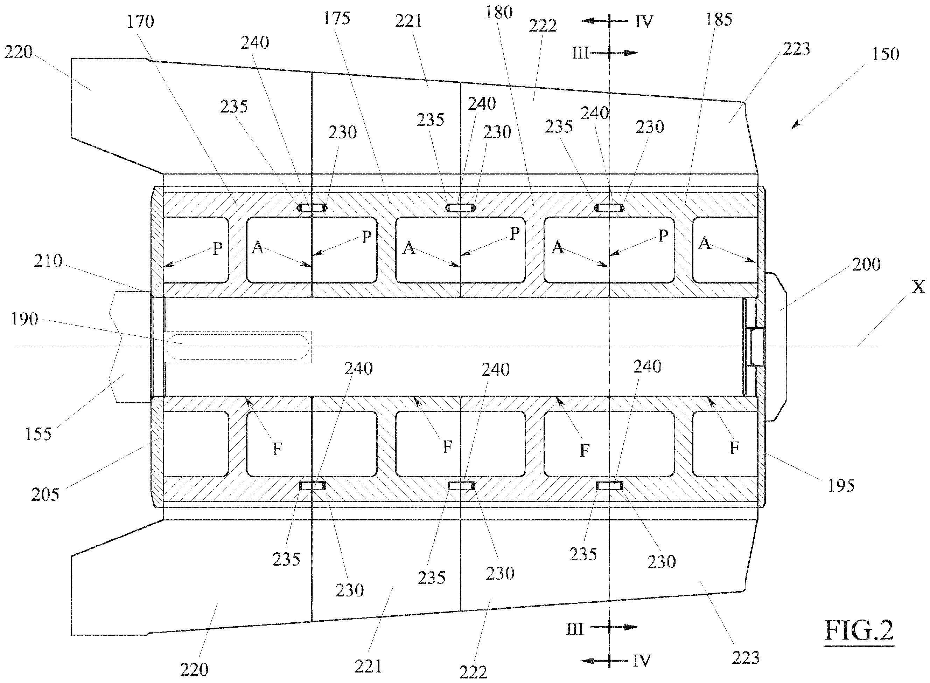

As better illustrated in figure 2, the rotor 150 comprises a plurality of cylindrical bodies, in the example a first cylindrical body 170, a second cylindrical body 175, a third cylindrical body 180 and a fourth and final cylindrical body 180. The cylindrical bodies 170-185 all substantially have the same axial length and the same external diameter. Each of them further comprises a central hole F, which extends a through-hole passing between a flat front face A and a rear flat face P of the respective cylindrical body.

The cylindrical bodies 170-185 are coaxially inserted through the central holes F, in succession on the section of the support shaft 155 which is contained internally of the sieve 145, such that at least a flat face of each cylindrical body is substantially in contact with the flat face of an adjacent cylindrical body. In the example, the front face A of the first cylindrical body 170 is placed substantially in contact with the rear face P of the second cylindrical body 175, the front face A of the second cylindrical body 175 is placed substantially in contact with the rear face P of the third cylindrical body 180 and the front face A of the third cylindrical body 180 is placed substantially in contact with the rear face P of the fourth cylindrical body 185.

The cylindrical bodies 170-185 are connected to one another by means of front-engaging joints (which will be described in detail in the following), such as to form a pack which behaves as a single body with respect to the rotations about the central axis X.

The pack of cylindrical bodies 170-185 is rotatably constrained to the support shaft 155 by means of a key 190, which is housed contemporaneously in a seating afforded on the external surface of the support shaft 155 and in a seating afforded on the internal surface of the central hole F of the first cylindrical body 170.

The pack of cylindrical bodies 170-185 is further axially constrained between a front plate 195, which abuts against a sleeve 200 screwed to the free end of the support shaft 155, and a rear plate 205, which is inserted on the support shaft 155 and abuts against an abutment 210 fashioned in a proximal position to the bottom 125.

Each of the above-mentioned cylindrical bodies 170-185 is provided with a respective group of radial blades, respectively 220, 221, 222 and 223, which are arranged in a spoke fashion about the central axis X. Each of the radial blades 220-223 can be rigidly fixed to the lateral surface of the relative cylindrical body 170-185, for example by means of screws.

The radial blades 220-223 which are associated to a same cylindrical body 170-185 are preferably arranged angularly equidistant to one another about the central axis X. In particular, in the illustrated embodiment, the second, third and fourth cylindrical bodies 175-185 all have the same number of radial blades separated from the same angular step, in the example twelve radial blades separated by a step of 30°, while the first cylindrical body 170 exhibits half the radial blades separated by a double angular step, in the example six radial blades separated by an angular step of 60° (see figures from 5 to 8).

In general, all the radial blades 220-223 have a substantially flat shape and are orientated parallel to the central axis X, such as to bring the lateral edge thereof in proximity of the internal surface of the sieve 145. More in particular, all the radial blades 220-223 which are associated to the cylindrical body 170-185 can be identical to one another, and differ from those associated to the other cylindrical bodies only due to the lateral profile thereof, which naturally has to follow the profile of the sieve.

As mentioned above, each cylindrical body 170-185 is connected to the adjacent ones by means of a front-engaging joint, such that all the cylindrical bodies are solidly constrained to one another with respect to the rotations above the central axis X. Beyond this, each of the front-engaging joints has to be demountable and has to enable each pair of adjacent cylindrical bodies 170-175, 175-180 and 180-185 to be connected to one another in multiple reciprocal angular positions with respect to the central axis X.

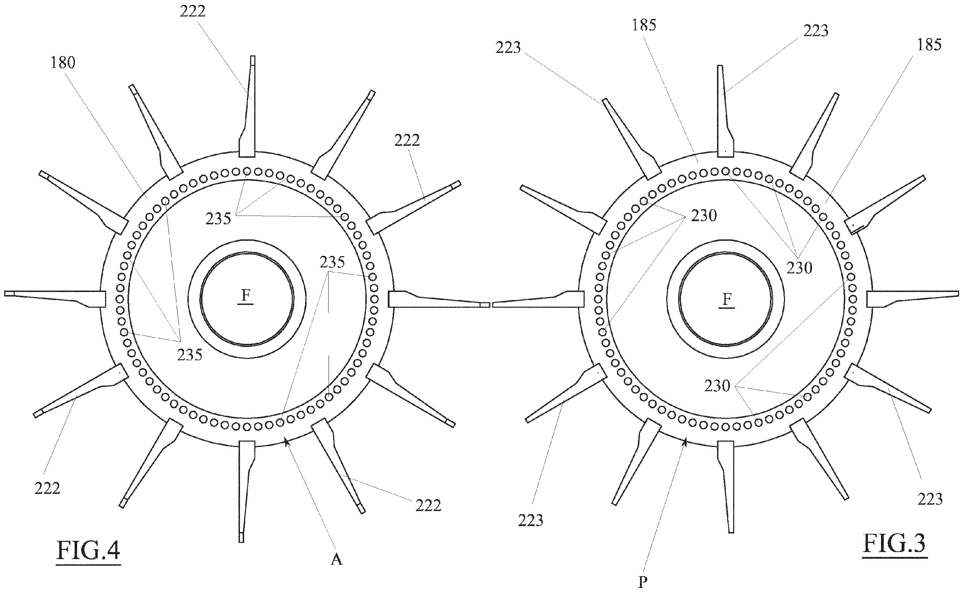

To realise the front-engaging joints, in the example illustrated in the figures the rear faces P of the second cylindrical body 175, the third cylindrical body 180 and the fourth cylindrical body 185 are singly provided with a respective front hole group 230 (see figure 3). The front holes 230 are offset and have parallel axes to the central axis X. In particular, the front holes 230 of each group are equidistant from the central axis X and are distributed about the axis such as to be reciprocally separated by a constant angular step. By way of example, the angular step separating the front holes 230 can be about 5 degrees.

Correspondingly the front faces A of the first cylindrical body 170, the second cylindrical body 175 and the third cylindrical body 180, are singly provided by a further group of frontal holes 235, which are also offset and have parallel axes to the central axis X, such as to be able to align with the front holes 230 (see for example figure 4). In this regard, the front holes 235 are distant from the central axis X by a quantity of equal to the front holes 230. The front holes 235 are further distributed about the central axis X in such a way as to be reciprocally separated by a constant angular step, which can be the same as or a multiple of the step of the front holes 230.

Each of the front holes 235 is predisposed to be able to coaxially house a connecting plug 240 (see figure 2), a section of which projects with respect to the front face A of the relative cylindrical body.

In this way, the connecting plugs 240 which project for example from the front face A of the first cylindrical body 170 can all be contemporaneously aligned and inserted internally of corresponding front holes 230 afforded on the rear face P of the second cylindrical body 175, realizing a fitting that makes them reciprocally solidly constrained with respect to the rotations about the axis X.

The alignment and fitting can further be obtained for various relative angular positions between the first cylindrical body and the second cylindrical body 175, the reciprocal angular position of which can thus be modified as required by discrete quantities equal to the angular step separating the front holes 230, in the example by a quantity of about 5 degrees.

The same is naturally also true of the connection between the other pairs of consecutive cylindrical bodies, i.e. between the second cylindrical body 175 and the third cylindrical body 180, as well as between the third cylindrical body 180 and the fourth cylindrical body 185. In this way, the cylindrical bodies 170-185 can be coupled in a multiplicity of different angular configurations, enabling also varying the angular phasing between the groups of radial blades 220-223 which are fixed on each of them.

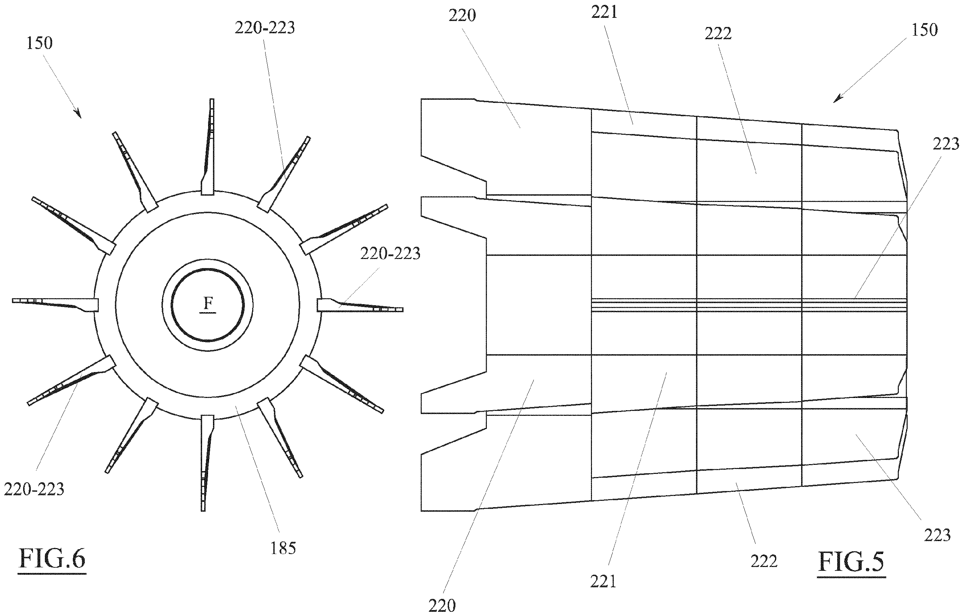

In particular the radial blades 220-223 of all the cylindrical bodies 170-185 can be perfectly aligned to one another to form rows parallel to the central axis X (as shown in figures 5 and 6). In this way, a configuration is realized in which each row of radial blades defines in fact a single straight blade which extends over the whole length of the rotor 150 and which is only able to centrifuge the product against the sieve 145.

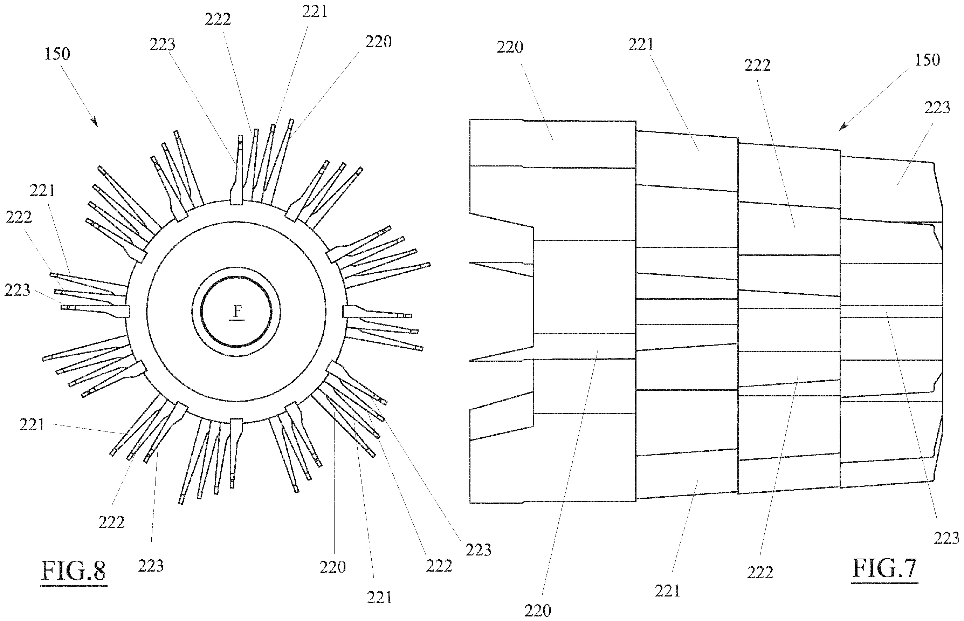

Alternatively, it is possible to reposition the cylindrical bodies 170-185 such that the radial blades of each of them are angularly offset by a predetermined quantity with respect to the radial blades that are associated to the adjacent cylindrical body (as shown in figures 7 and 8). In this way, the radial blades 220-223 of each row can be distributed according to a helical progression about the central axis X, which enables exerting, on the product to be treated, both the centrifugal thrust necessary for the pressing and an axial thrust.

According to whether the helical progression of the rows of radial blades 220-223 is in the same or the opposite sense to the rotation direction of the rotor 150, the axial thrust can be directed in the advancement direction of the product to be treated in an opposite direction.

In the first case, the axial thrust can thus facilitate the discharge of the waste through the discharge mouth 130, while in the second case, the axial thrust creates a counterpressure which further increases the pressure with which the product is pushed against the internal surface of the sieve 145, increasing the degree of pressing up to the point at which the discharge of the waste can be done with the waste practically free of moisture.

By increasing or reducing the angular step between the radial blades 220-223 associated to the various cylindrical bodies 170-185, i.e. by accentuating or reducing the inclination of the propellers defined thereby, it is further advantageously possible to regulate the entity of the centrifugal thrust and the axial thrust, for example on the basis of the type and/or viscosity of the product to be treated.

If necessary, the angular step between the radial blades 220-223 associated to the various cylindrical bodies 170-185 can also be regulated differently on the basis of their axial position thereof on the support shaft 155, obtaining propellers having a variable inclination which enable for example increasing the degree of pressing of the product at the outlet end of the sieve 145 rather than at the inlet end.

Thanks to all of the above options, the extracting machine 100 described above is therefore extremely versatile, to the point of being able to be effectively used both as a sieve for tomatoes and as a refiner for fruits or even as a press for waste.

In conclusion note that although the rotor 150 described above comprises four cylindrical bodies 170-185, in other embodiments the rotor 150 can be provided with a different number of bladed cylindrical bodies.

Obviously a technical expert in the sector might make numerous modifications of a technical-applicational nature to the extracting machine 100, without forsaking the scope of the invention as claimed in the following.

## Claims

1. An extracting machine (100) for food products comprising a sieve (145) having a substantially tubular shape provided with an inlet for the product to be treated and an outlet for waste, and a rotor (150) rotatably housed internally of the sieve (145), **characterised in that** the rotor (150) comprises a pack of cylindrical bodies (170-185) arranged in succession and coaxial, wherein each of the cylindrical bodies (170-185) is provided with a respective group of blades (220-223) arranged in spoke-fashion there-about, and wherein the cylindrical bodies (170-185) are joined to one another by connecting means (230, 235, 240) which enable modifying the reciprocal angular position thereof about a central common axis (X).

2. The machine (100) of claim 1, **characterised in that** the connecting means comprise, for each pair of consecutive cylindrical bodies (170-175, 175-180, 180-185), a demountable joint (230, 235, 240) which enables joining the cylindrical bodies of the pair together in various reciprocal angular positions.

3. The machine (100) of claim 2, **characterised in that** the demountable joint (230, 235, 240) is a frontally-engaging joint.

4. The machine (100) of claim 3, **characterised in that** the frontally-engaging joint comprises at least an element (240) projecting frontally from an end of a first cylindrical body (170, 175, 180) of each pair and arranged in an offset position with respect to the common central axis (X), and a plurality of offset holes (230) afforded frontally of an end of the second cylindrical body (175, 180, 185) of each pair, which can be selectively aligned and coupled to the projecting element (240) of the first cylindrical body, following a reciprocal rotation of the first and second cylindrical body about the common central axis (X).

5. The machine (100) of claim 4, **characterised in that** the projecting element is defined by a plug (240), which is partially inserted in an offset hole (235) afforded frontally at the end of the first cylindrical body (170, 175, 180) of each pair.

6. The machine (100) of claim 5, **characterised in that** the end of the first cylindrical body (170, 175, 180) of each pair is frontally provided with a plurality of offset holes (235), each of which can partially house a respective plug (240).

7. The machine (100) of any one of the preceding claims, **characterised in that** the pack of cylindrical bodies (170-185) is coaxially inserted on a single support shaft (155), with respect to which it is axially and rotatably constrained.

8. The machine (100) of claim 7, **characterised in that** the pack of cylindrical bodies (170-185) is axially constrained to the support shaft (155) by means of a sleeve (200), which can be screwed to the end of the support shaft (155), such as to maintain the pack of cylindrical bodies against an abutment.

9. The machine (100) of claim 7, **characterised in that** the pack of cylindrical bodies (170-185) is rotatably constrained to the support shaft (155) by means of at least a key (190) which engages contemporaneously in a seating fashioned in the support shaft (155) and a seating fashioned in at least one of the cylindrical bodies (170).

## Patentansprüche

1. Extrahiermaschine (100) für Lebensmittelprodukte, ein Sieb (145) mit einer im Wesentlichen röhrenförmigen Gestalt, das mit einem Einlass für das zu behandelnde Produkt und einem Auslass für Abfall versehen ist, und einen Rotor (150) umfassend, der drehbar im Inneren des Siebs (145) untergebracht ist, **dadurch gekennzeichnet, dass** der Rotor (150) einen Packen zylinderförmiger Körper(170-185) umfasst, die nacheinander und koaxial angeordnet sind, wobei jeder der zylinderförmigen Körper (170-185) mit einer entsprechenden Gruppe von Schaufeln (220-223) versehen ist, die radspeichenartig um ihn herum angeordnet sind, und wobei die zylinderförmigen Körper(170-185) durch Verbindungsmittel(230, 235, 240) miteinander gekoppelt sind, die ein Modifizieren von deren wechselseitiger Winkelposition um eine gemeinsamen Mittelachse (X) ermöglicht.

2. Maschine (100) nach Anspruch 1, **dadurch gekennzeichnet, dass** die Verbindungsmittel für jedes Paar der aufeinanderfolgenden zylinderförmigen Körper (170-175, 175-180, 180-185) eine demontierbare Kopplung (230, 235, 240) umfassen, die das Koppeln der zylinderförmigen Körper des Paars miteinander in verschiedenen wechselseitigen Winkelpositionen ermöglicht.

3. Maschine (100) nach Anspruch 2, **dadurch gekennzeichnet, dass** die demontierbare Kopplung (230, 235, 240) eine frontal eingreifende Kopplung ist.

4. Maschine (100) nach Anspruch 3, **dadurch gekennzeichnet, dass** die frontal eingreifende Kopplung mindestens ein Element (240), das von einem Ende eines ersten zylinderförmigen Körpers (170, 175, 180) jedes Paares frontal hervorsteht und im Verhältnis zur gemeinsamen Mittelachse (X) in einer versetzten Position angeordnet ist, und mehrere versetzte Öffnungen (230) umfasst, die frontal an einem Ende des zweiten zylinderförmigen Körpers (175, 180, 185) jedes Paares bereitgestellt sind, die auf eine gegenseitige Drehung des ersten und des zweiten zylinderförmigen Körpers um die gemeinsame Mittelachse (X) folgend wahlweise ausgerichtet und mit dem hervorstehenden Element (240) des zylinderförmigen Körpers gekoppelt werden können.

5. Maschine (100) nach Anspruch 4, **dadurch gekennzeichnet, dass** das hervorstehenden Element durch einen Stopfen (240) definiert ist, der teilweise in eine versetzte Öffnung (235) eingesetzt ist, die frontal am Ende des ersten zylinderförmigen Körpers (170, 175, 180) jedes Paares bereitgestellt ist.

6. Maschine (100) nach Anspruch 5, **dadurch gekennzeichnet, dass** das Ende des ersten zylinderförmigen Körpers (170, 175, 180) jedes Paares frontal mit mehreren versetzten Öffnungen (235) versehen ist, von denen jede teilweise einen entsprechenden Stopfen (240) unterbringen kann.

7. Maschine (100) nach einem der vorhergehenden Ansprüche, **dadurch gekennzeichnet, dass** der Packen zylinderförmiger Körper (170-185) koaxial auf eine einzelne Trägerwelle (155) aufgesetzt ist, zu der im Verhältnis er axial und drehbar befestigt ist.

8. Maschine (100) nach Anspruch 7, **dadurch gekennzeichnet, dass** der Packen zylinderförmiger Körper (170-185) mittels einer Hülse (200), die an das Ende der Trägerwelle (155) geschraubt sein kann, axial an der Trägerwelle (155) befestigt ist, so dass der Packen zylinderförmiger Körper an einem Anschlag gehalten wird.

9. Maschine (100) nach Anspruch 7, **dadurch gekennzeichnet, dass** der Packen zylinderförmiger Körper (170-185) mittels mindestens einer Passfeder (190), die gleichzeitig in einen Sitz, der in der Trägerwelle (155) gebildet ist, und in einen Sitz eingreift, der in mindestens einem der zylinderförmigen Körper (170) gebildet ist, drehbar an der Trägerwelle (155) befestigt ist.

## Revendications

1. Machine d'extraction (100) pour produits alimentaires comprenant un tamis (145), ayant une forme sensiblement tubulaire doté d'une entrée pour le produit à traiter et une sortie pour les déchets, et un rotor (150) logé de manière rotative à l'intérieur du tamis (145), **caractérisée en ce que** le rotor (150) comprend un pack de corps cylindriques (170 à 185) disposés successivement et coaxiaux, dans laquelle chacun des corps cylindriques (170 à 185) est doté d'un groupe respectif de lames (220 à 223) disposé à peu près en étoile, et dans laquelle les corps cylindriques (220 à 223) sont interconnectés par des moyens de connexion (230, 235, 240) qui permettent de modifier la position angulaire réciproque de ceux-ci selon un axe central commun (X).

2. Machine (100) selon la revendication 1, **caractérisée en ce que** les moyens de connexion comprennent, pour chaque paire de corps cylindriques consécutifs (170-175, 175-180, 180-185), un joint démontable (230, 235, 240) qui permet de connecter ensemble les corps cylindriques de la paire selon différentes positions angulaires réciproques.

3. Machine (100) selon la revendication 2, **caractérisée en ce que** le joint démontable (230, 235, 240) est un joint s'engageant frontalement.

4. Machine (100) selon la revendication 3, **caractérisée en ce que** le joint s'engageant frontalement comprend au moins un élément (240) faisant saillie frontalement depuis une extrémité d'un premier corps cylindrique (170, 175, 180) de chaque paire et disposé dans une position décalée par rapport à l'axe central commun (X), et une pluralité de trous décalés (230) placés frontalement sur une extrémité du second corps cylindrique (175, 180, 185) de chaque paire, qui peuvent être sélectivement alignés et couplés à l'élément faisant saillie (240) du premier corps cylindrique, suivant une rotation réciproque du premier et second corps cylindriques autour de l'axe central commun (X).

5. Machine (100) selon la revendication 4, **caractérisée en ce que** l'élément faisant saillie est défini par un bouchon (240), qui est partiellement inséré dans un trou décalé (235) placé frontalement à l'extrémité du premier corps cylindrique (170, 175, 180) de chaque paire.

6. Machine (100) selon la revendication 5, **caractérisée en ce que** l'extrémité du premier corps cylindrique (170, 175, 180) de chaque paire est frontalement dotée d'une pluralité de trous décalés (235), chacun pouvant partiellement logé un bouchon respectif (240).

7. Machine (100) selon l'une quelconque des revendications précédentes, **caractérisée en ce que** le pack de corps cylindriques (170 à 185) est coaxialement inséré dans un arbre de support unique (155), par rapport auquel il est axialement et rotativement contraint.

8. Machine (100) selon la revendication 7, **caractérisée en ce que** le pack de corps cylindriques (170 à 185) est axialement contraint à l'arbre de support (155) au moyen d'un manchon (200), qui peut être vissé à l'extrémité de l'arbre de support (155), de façon à maintenir le pack de corps cylindriques contre une butée.

9. Machine (100) selon la revendication 7, **caractérisée en ce que** le pack de corps cylindriques (170 à 185) est rotativement contraint à l'arbre de support (155) au moyen d'au moins une clé (190) qui s'engage simultanément dans un logement façonné dans l'arbre de support (155) et un logement façonné dans au moins un des corps cylindriques (170).
